# EUROPEAN PATENT APPLICATION

(11) **EP 2 120 453 A2**
(43) Date of publication of application: **18.11.2009**
(21) Application number: 09160092.4
(22) Date of filing: 13.05.2009
(51) Int. Cl.: H04N 5/235

(54) **Image Processing Device and Method, and Computer-Readable Recording Medium Containing Program**

(30) Priority: 14.05.2008 JP 2008126681
(71) Applicant: Fujifilm Corporation, Minato-ku Tokyo (JP)
(72) Inventor: Kurahashi, Hidekazu, Miyagi (JP); Tanaka, Seiji, Miyagi (JP)
(74) Representative: Grünecker, Kinkeldey, Stockmair & Schwanhäusser Anwaltssozietät

(57) **Abstract**

An image processing device include: an image obtaining unit (2, 3) for obtaining a plurality of images having different exposure values; an exposure adjustment unit (12) for carrying out exposure adjustment processing by applying bit extension to each of the images and adjusting exposure values of the images to an exposure value of a first image, which has the lowest exposure value, of the images; and a composition unit (13) for generating a composite image by combining the images subjected to the exposure adjustment processing.

## Description

### BACKGROUND OF THE INVENTION

### Field of the Invention

The present invention relates to an image processing device and an image processing method for improving tone reproduction of an image, as well as a computer-readable recording medium containing a program for causing a computer to carry out the image processing method.

### Description of the Related Art

Usually, in imaging devices such as a digital camera, an imaging signal of a photographed image outputted from an image pickup device is subjected to various signal processing operations, such as white balance correction, tone conversion, shading correction and exposure correction, to improve image quality of the output image. However, these various signal processing operations add a gain to the imaging signal, and thus the resolution is reduced. Therefore, it is necessary to make the resolution of the image to be subjected to the signal processing higher than the resolution of the output image. In the imaging devices, in order to output an image having 8-bit gray level, the analog imaging signal outputted from the image pickup device is subjected to A/D conversion at a resolution higher than 8 bits, such as 12 bits or 14 bits, to obtain the digital imaging signal.

However, since the number of bits of the image to be subjected to the signal processing is limited by the resolution of the A/D conversion, it is not possible to carry out the signal processing with bit accuracy higher than the resolution of the A/D conversion. In this case, it may be considered to increase the resolution of the A/D conversion; however, increasing the resolution of the A/D conversion increases costs of a circuit for performing the A/D conversion, and this in turn increases costs of the device.

In order to address this problem, a system has been proposed, which employs an image pickup device being capable of obtaining a high-sensitivity signal and a low-sensitivity signal. For pixels having a lightness value higher than a predetermined threshold, the low-sensitivity signal is used (see Japanese Unexamined Patent Publication No. 2001-008104). The system disclosed in this patent document can accomplish good continuity of the tone, in particular, at the highlight side.

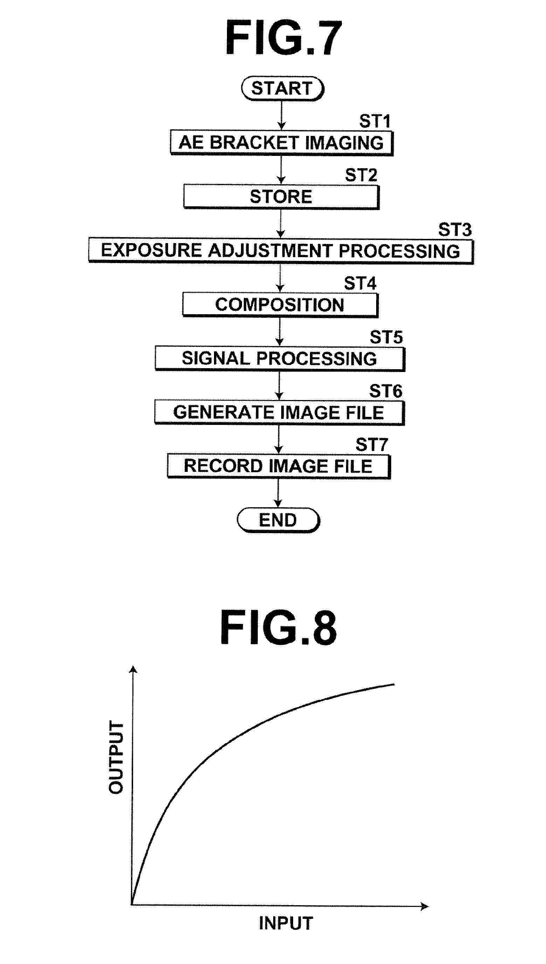

In the system disclosed in the above patent document, however, although the tone reproducibility at the highlight side can be improved, tone reproducibility of the dark areas of the image cannot be improved. In the tone conversion carried out in the imaging device, the rate of change is large for the dark areas, as shown in FIG. 8. Therefore, if tones of the dark areas are not reproduced, tendency of blackening (unintended saturation) in the output image is increased.

### SUMMARY OF THE INVENTION

In view of the above-described circumstances, the present invention is directed to improving tone reproduction of an image, in particular, tone reproduction of dark areas of the image.

One aspect of an image processing device according to the invention includes: image obtaining means for obtaining a plurality of images having different exposure values; exposure adjustment means for carrying out exposure adjustment processing by applying bit extension to each of the images and adjusting exposure values of the images to an exposure value of a first image of the images, the first image having the lowest exposure value; and composition means for generating a composite image by combining the images subjected to the exposure adjustment processing.

In the image processing device according to the invention, the exposure adjustment means may carry out the exposure adjustment processing by correcting lightness of the image other than the first image to lightness of the first image and applying bit extension to the images, and the composition means may generate the composite image by substituting a part of information of the first image with a corresponding part of information of the other image subjected to the exposure adjustment processing.

In the image processing device according to the invention, the exposure adjustment means may carry out the exposure adjustment processing by applying bit extension and gain processing to the images to adjust lightness of the image other than the first image to lightness of the first image, and applying offset processing to the images to avoid overlap of the images after the gain processing, and the composition means may generate the composite image by adding up the images subjected to the exposure adjustment processing.

In this case, the exposure adjustment means may carry out the gain processing and the offset processing by referencing a table which outputs a lightness value after the gain processing and the offset processing for an inputted lightness value of each image.

Further, in this case, the table may be adapted to apply the gain processing and the offset processing to provide gradual change at a saturated portion of the lightness of each image forming the composite image.

In the image processing device according to the invention, the exposure adjustment means may carry out the exposure adjustment processing by converting the images using a table to provide gradual change at a saturated portion of the lightness of each image forming the composite image and to apply offset processing to avoid overlap of the images, and applying bit extension and gain processing to the converted images, and the composition means may generate the composite image by adding up the images subjected to the exposure adjustment processing.

In the image processing device according to the invention, the exposure adjustment means may apply the exposure adjustment processing sequentially to the images, and the composition means may sequentially combine each image subjected to the exposure adjustment processing.

In the image processing device according to the invention, the image obtaining means may include: imaging means for obtaining an image through a photographing operation; and imaging control means for controlling the imaging means to obtain the plurality of images by carrying out more than one photographing operations to take a same scene with different exposure values.

One aspect of an image processing method according to the invention includes: obtaining a plurality of images having different exposure values; carrying out exposure adjustment processing by applying bit extension to each of the images and adjusting exposure values of the images to an exposure value of a first image of the images, the first image having the lowest exposure value; and generating a composite image by combining the images subjected to the exposure adjustment processing.

The present invention may also be implemented in the form of a recording medium containing a program for causing a computer to carry out the image processing method according to the invention.

### BRIEF DESCRIPTION OF THE DRAWINGS

FIG. 1 is a schematic block diagram illustrating the configuration of a digital camera, to which an image processing device according to a first embodiment of the present invention is applied,
FIG. 2 is a diagram illustrating the configuration of an imaging unit,
FIG. 3 is a conceptual diagram of exposure adjustment processing and composition processing in the first embodiment,
FIG. 4 is a graph illustrating a relationship between an amount of light and a QL value of a low-exposure image,
FIG. 5 is a graph illustrating a relationship between the amount of light and the QL value of a high-exposure image,
FIG. 6 is a graph illustrating a relationship between the amount of light and the QL value of a composite image generated according to the first embodiment,
FIG. 7 is a flow chart illustrating operations carried out in the first embodiment,
FIG. 8 is a graph showing characteristics of tone conversion,
FIG. 9 is a conceptual diagram of the exposure adjustment processing and the composition processing in a second embodiment,
FIG. 10 is a graph for explaining gain processing and offset processing applied to the low-exposure image,
FIG. 11 is a graph for explaining gain processing and offset processing applied to the high-exposure image,
FIG. 12 is a graph illustrating a relationship between the amount of light and the QL value of the composite image generated according to the second embodiment,
FIG. 13 is a flow chart illustrating operations carried out in the second embodiment,
FIG. 14 is a conceptual diagram of the exposure adjustment processing and the composition processing in a third embodiment,
FIG. 15 illustrates a table used for the low-exposure image in the third embodiment,
FIG. 16 illustrates a table used for the high-exposure image in the third embodiment,
FIG. 17 is a graph illustrating a relationship between the amount of light and the QL value of the composite image generated according to the third embodiment,
FIG. 18 is a flow chart illustrating operations carried out in the third embodiment,
FIG. 19 is a conceptual diagram of the exposure adjustment processing and the composition processing in a fourth embodiment,
FIG. 20 illustrates a table used for the high-exposure image in the fourth embodiment,
FIG. 21 is a graph illustrating a relationship between the amount of light and the QL value of the high-exposure image after table conversion in the fourth embodiment,
FIG. 22 is a graph illustrating a relationship between the amount of light and the QL value of the high-exposure image after the gain processing in the fourth embodiment,
FIG. 23 is a flow chart illustrating operations carried out in the fourth embodiment,
FIG. 24 is a conceptual diagram of the exposure adjustment processing and the composition processing in a fifth embodiment, and
FIG. 25 is a flow chart illustrating operations carried out in the fifth embodiment.

### DESCRIPTION OF THE PREFERRED EMBODIMENTS

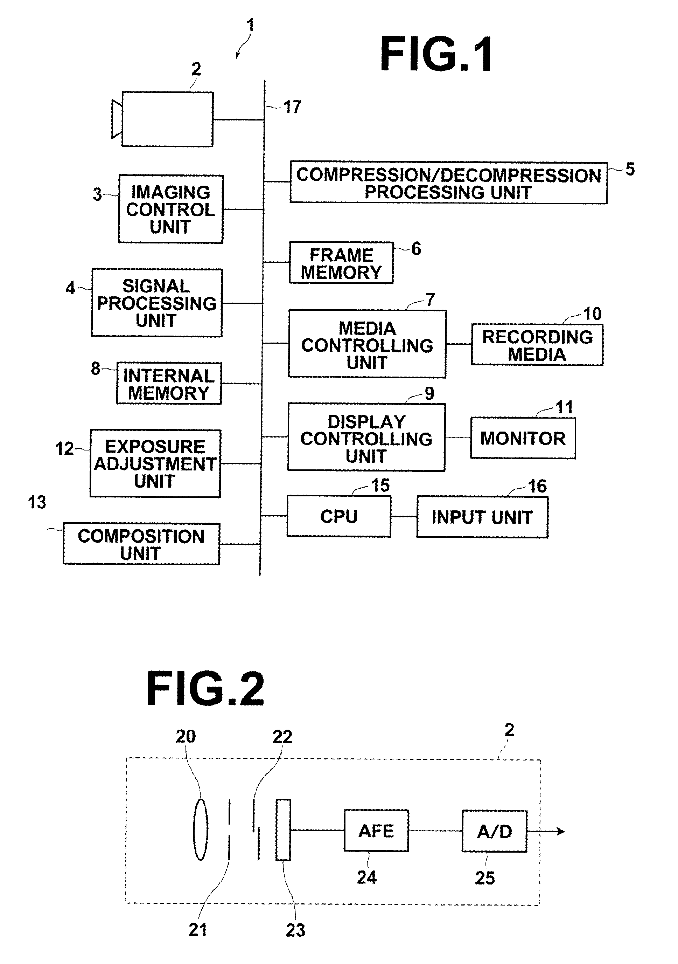

Hereinafter, embodiments of the present invention will be described with reference to the drawings. FIG. 1 is a schematic block diagram illustrating the configuration of a digital camera, to which an image processing device according to a first embodiment of the invention is applied. As shown in FIG. 1, a digital camera 1 according to the first embodiment includes an imaging unit 2, an imaging control unit 3, a signal processing unit 4, a compression/decompression processing unit 5, a frame memory 6, a media controlling unit 7, an internal memory 8 and a display controlling unit 9.

FIG. 2 illustrates the configuration of the imaging unit 2. As shown in FIG. 2, the imaging unit 2 includes a lens 20, a diaphragm aperture 21, a shutter 22, a CCD 23, an analog front end (AFE) 24 and an A/D conversion unit 25.

The lens 20 is formed by a plurality of lenses having their respective functions, such as a focusing lens for focusing on a subject and a zooming lens for effecting a zooming function, and the position of each lens is adjusted by a lens driving unit (not shown) . For example, the lens driving unit adjusts the focal position of the focusing lens.

The aperture diameter of the diaphragm aperture 21 is adjusted by a diaphragm aperture driving unit (not shown) based on aperture value data obtained through AE processing.

The shutter 22 is a mechanical shutter, and is driven by a shutter driving unit (not shown) according to a shutter speed obtained through the AE processing.

The CCD 23 includes a photoelectric surface having a predetermined size, on which a large number of light-receiving elements are arranged two-dimensionally. A light image of the subj ect is focused on the photoelectric surface and is subjected to photoelectric conversion to obtain an analog imaging signal. Further, a color filter formed by regularly arrayed R, G and B color filters are disposed on the front side of the CCD 23.

The AFE 24 processes the analog imaging signal outputted from the CCD 23 to remove noise from the analog imaging signal and adjust gain of the analog imaging signal (hereinafter, this operation is referred to as "analog processing").

The A/D conversion unit 25 converts the analog imaging signal, which has been subjected to the analog processing by the AFE 24, into a digital imaging signal having a predetermined number of bits. It should be noted that the image data which is obtained by converting the analog imaging signal obtained at the CCD 23 of the imaging unit 2 into the digital imaging signal is raw data, which includes R, G and B density values for the individual pixels.

The imaging control unit 3 controls an imaging operation after a release button is pressed. Further, when the release button is half-pressed, the imaging control unit 3 carries out AF processing and the AE processing to set the focal position of the focusing lens, the aperture value data and the shutter speed. It should be noted that, in a state where the release button is not pressed, the imaging control unit 3 controls the imaging unit 2 to take a live view image. Furthermore, in this embodiment, after the release button is pressed, the imaging control unit 3 controls the imaging unit 2 to carry out AE bracket imaging to obtain a plurality of images having different exposure values. Specifically, the AE bracket imaging is carried out by performing more than one imaging operations with different exposure values which are differed in a stepwise manner, such as +1 Ev, +2 Ev, etc.

The signal processing unit 4 applies signal processing, such as optical black correction for correcting dark current of the CCD 23, white balance adjustment, tone conversion, sharpness correction and color correction, to image data of a composite image generated from the images obtained by the imaging unit 2, which will be described later.

The compression/decompression processing unit 5 applies compression processing according to a certain compression format, such as JPEG, to the image data, which has been processed by the signal processing unit 4, to generate an image file. A header describing accompanying information, such as photographing time and date, is added to the image file, based, for example, on the Exif format.

The frame memory 6 provides a workspace for various processing, including the processing by the signal processing unit 4, applied to the image data representing the image obtained by the imaging unit 2.

The media controlling unit 7 accesses a recording medium 10 and controls writing and reading of the image file into and from the recording medium 10.

The internal memory 8 stores various constants to be set in the digital camera 1, programs to be executed by the CPU 15, etc.

The display controlling unit 9 causes the image data stored in the frame memory 6 or the image recorded in the recording medium 10 to be displayed on a monitor 11.

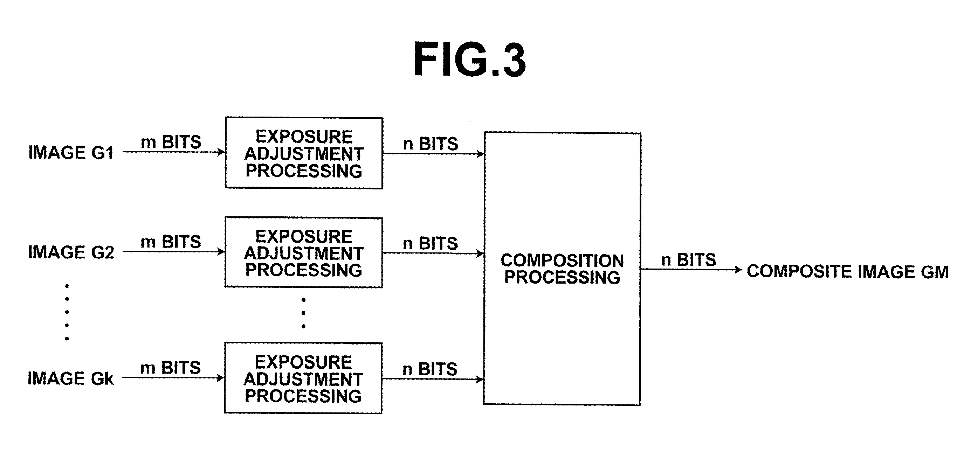

The digital camera 1 further includes an exposure adjustment unit 12 and a composition unit 13. FIG. 3 is a conceptual diagram of exposure adjustment processing carried out by the exposure adjustment unit 12 and composition processing carried out by the composition unit 13 in the first embodiment. In the first embodiment, as shown in FIG. 3, for each of images G1-Gk represented by image data obtained through the AE bracket imaging and subjected to the A/D conversion, the exposure adjustment processing is carried out by correcting lightness of the image, other than a first image having the lowest exposure, to the lightness of the first image, and applying bit extension from m bits to n bits (n >m) . Then, the images subjected to the exposure adjustment processing are combined to output image data of an n-bit composite image GM.

Now, a process of combining the images obtained through the AE bracket imaging in the first embodiment is specif ically described. In this example, it is supposed that the AE bracket imaging is carried out such that two images having an exposure difference of 2 Ev therebetween are obtained. It should be noted that the exposure difference can be changed depending on the necessary number of bits, and may specifically in the range from 2 Ev to 3 Ev. Of the two imaging operations for obtaining the two images, the imaging operation carried out with a lower exposure is referred to as low-exposure imaging and the imaging operation carried out with a higher exposure is referred to as high-exposure imaging. Further, the images obtained through the low-exposure imaging and the high-exposure imaging and subjected to the A/D conversion are referred to as a low-exposure image GL and a high-exposure image GH, respectively.

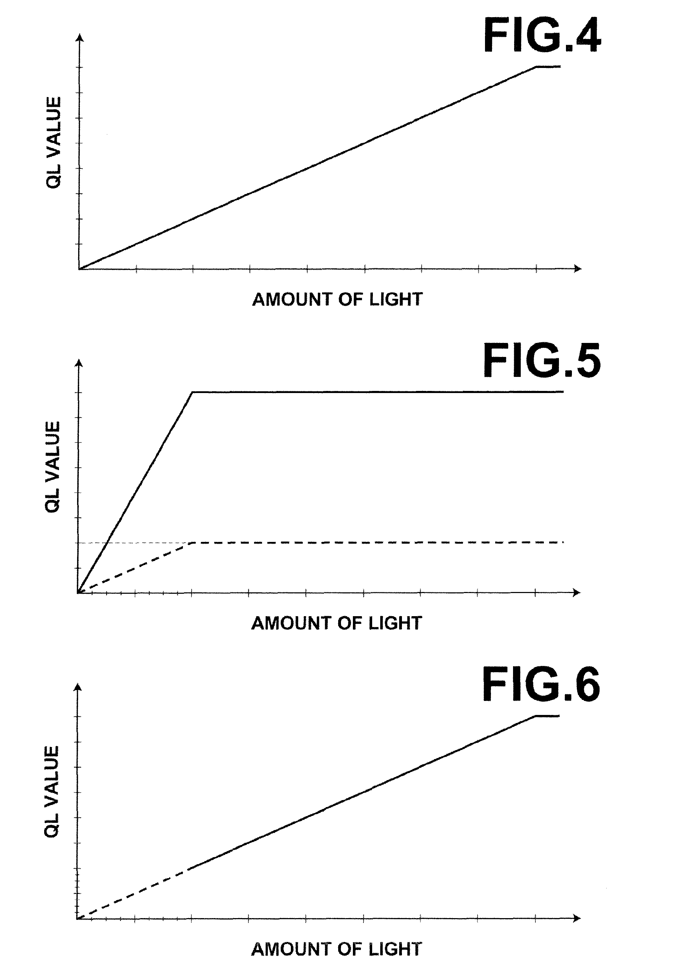

FIG. 4 illustrates a relationship between an amount of light and a QL value of the low-exposure image GL (i.e., a digital imaging signal value of each pixel of the image), and FIG. 5 illustrates a relationship between the amount of light and the QL value of the high-exposure image GH. As shown in FIG. 4, the low-exposure image GL obtained by the low-exposure imaging has gradation over a wide range of the amount of light. In contrast, as shown in FIG. 5, the high-exposure image GH obtained by the high-exposure imaging has gradation over a range which is 1/4 of that of the low-exposure image due to the exposure difference of 2 Ev, however, has finer tone expression at dark areas.

Therefore, the exposure adjustment unit 12 applies to the high-exposure image GH the bit extension and the exposure adjustment processing to adjust the exposure value of the high-exposure image GH to the exposure value of the low-exposure image GL. Since the exposure difference between the low-exposure image GL and the high-exposure image GH is 2 Ev, the lightness of the high-exposure image GH is adjusted to 1/4, as shown by the dashed line in FIG. 5. By this operation, the bit accuracy of the high-exposure image GH is extended from m bits to m+2 bits. It should be noted that the reason of the extension to m+2 bits is that the exposure difference between the low-exposure image GL and the high-exposure image GH is 2 Ev. Therefore, if the exposure difference is α Ev, extension to m+α bits is performed in the exposure adjustment processing. The lightness of the low-exposure image GL is not adjusted, and only the bit accuracy thereof is extended from m bits to m+2 bits.

The composition unit 13 combines the low-exposure image GL' and the high-exposure image GH' which have been subjected to the exposure adjustment processing. Specifically, information of dark areas of the low-exposure image GL' is substituted with that of the high-exposure image GH' to combine the low-exposure image GL' and the high-exposure image GH' to generate the composite image GM. FIG. 6 illustrates a relationship between the amount of light and the QL value of the composite image GM. It should be noted that, in FIG. 6, the portion of the low-exposure image GL' substituted with the corresponding portion of the high-exposure image GH is shown by the dashed line. As shown in FIG. 6, in the composite image GM, the resolution at the dark areas is equivalent to the resolution at the corresponding areas of the high-exposure image GH, resulting in improved resolution at the dark areas of the composite image GM than that in the low-exposure image GL.

The CPU 15 controls various units of the digital camera 1 according to signals inputted via an input unit 16 including a four-directional key, various operation buttons and the release button.

The data bus 17 is connected to the respective units and the CPU 15 forming the digital camera 1 to communicate various data and various information in the digital camera 1.

Next, operations carried out in the first embodiment are described. FIG. 7 is a flow chart illustrating the operations carried out in the first embodiment. It should be noted that, here, operations which are carried out after the release button is fully pressed are described.

As the release button is pressed, the imaging control unit 3 carries out the AE bracket imaging (step ST1). By this operation, the images having different exposure values are obtained. The obtained images G1-Gk are subjected to the A/D conversion and are temporarily stored in the internal memory 8 (step ST2). Then, the exposure adjustment unit 12 applies the bit extension and the exposure adjustment processing to the obtained images G1-Gk (step ST3). Further, the composition unit 13 combines the images G1-Gk, which have been subjected to the exposure adjustment processing, to generate the composite image GM (step ST4) .

Subsequently, the signal processing unit 4 applies the signal processing to the composite image GM (step ST5), and the compression/decompression processing unit 5 generates the image file of the image which has been subjected to the signal processing (step ST6) . Then, the media controlling unit 7 records the image file into the recording medium 10 (step ST7), and the process ends.

As shown in FIG. 8, in the characteristics of the tone conversion carried out by the signal processing unit 4, the rate of change is larger at a portion having a smaller input signal value, i.e., a dark area. In the case where the resolution of the tone at the dark areas is small, tendency of blackening (unintended saturation) at the dark areas due to the tone conversion increases.

A higher exposure value of the image provides higher resolution at the dark areas. In contrast, a lower exposure value of the image provides higher resolution at the light areas. Therefore, in the composite image GM, which is obtained from the images subjected to the bit extension and the exposure adjustment to adjust the exposure value (s) of the image (s) other than the first image to the exposure value of the first image, the bit accuracy of the high exposure image is maintained, in particular, at the dark areas, and this provides high resolution at the dark areas. Thus, according to the first embodiment, the composite image GM with improved tone reproducibility in particular at the dark areas can be obtained.

It should be noted that the tone conversion carried out by the signal processing unit 4 has various characteristics, and the rate of change at the dark areas varies depending on the characteristics of the tone conversion. Therefore, the maximum exposure difference in the AE bracket imaging (i.e., an exposure difference between the image having the lowest exposure vale and the image having the highest exposure value) may be changed depending on the characteristics of the tone conversion. Specifically, the AE bracket imaging may be carried out with a larger maximum exposure difference when the tone conversion provides a larger rate of change for the dark areas of the image.

Next, a second embodiment of the invention is described. It should be noted that the configuration of a digital camera, to which the image processing device according to the second embodiment is applied, is the same as the configuration of the digital camera according to the first embodiment, and only the operations to be carried out are different. Therefore, detailed description of the configuration is omitted. In the second embodiment, the exposure adjustment processing is achieved by gain processing and offset processing.

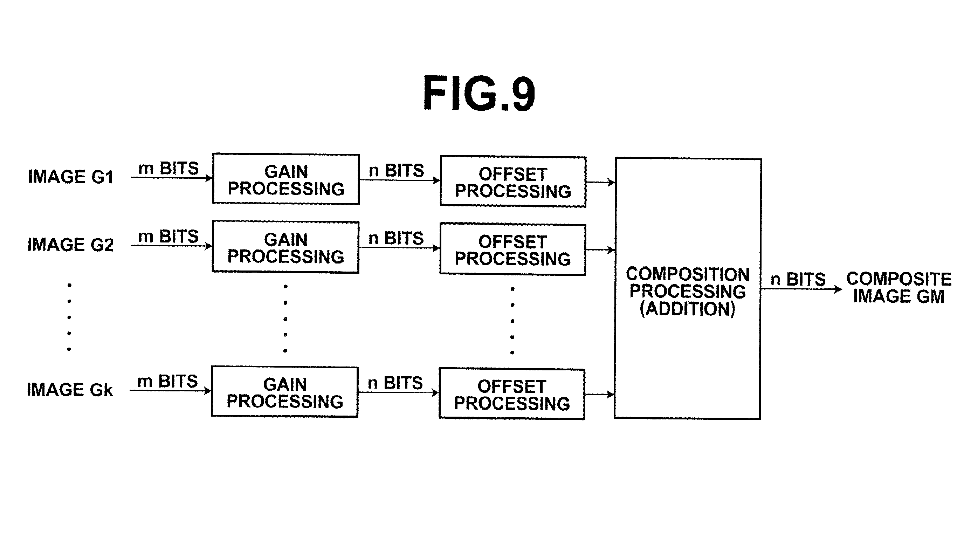

FIG. 9 is a conceptual diagram of the exposure adjustment processing carried out by exposure adjustment unit 12 and the composition processing carried out by the composition unit 13 in the second embodiment. As shown in FIG. 9, in the second embodiment, for each of the images G1-Gk represented by the image data which have been obtained through the AE bracket imaging and subjected to the A/D conversion, the exposure adjustment processing is carried out by applying the bit extension from m bits to n bits (n > m) and the gain processing to adjust the lightness of the image(s) other than the first image having the lowest exposure value to the lightness of the first image, and then applying the offset processing to avoid overlap to the images subjected to the gain processing. Then, the images subjected to the exposure adjustment processing are added up to output image data of the n-bit composite image GM.

Now, a process of combining the images obtained through the AE bracket imaging in the second embodiment is specifically described. In this example, it is supposed that the AE bracket imaging is carried out similarly to the first embodiment to obtain two images having an exposure difference of 2 Ev therebetween.

First, the exposure adjustment unit 12 sets gains for the images depending on the exposure difference. Namely, if an image having the lowest exposure is used as a reference, a gain of 1/1 is set for the lowest exposure image being the reference, and a gain of 1/2 is set for an image having an exposure difference of 1 Ev or a gain of 1/4 is set for an image having an exposure difference of 2 Ev. In this example, the exposure difference between the low-exposure image Gl and the high-exposure image GH is 2 Ev, and therefore, the exposure adjustment unit 12 sets a gain of 1/1 for the low-exposure image GL and a gain of 1/4 for the high-exposure image GH.

Further, the exposure adjustment unit 12 sets offset values for the images depending on the exposure difference. The offset value is set in order to avoid overlap of information in the composite image GM, such that, for each image, the maximum QL value of the image having the next lowest exposure value after the gain processing is set as the offset value. Namely, an offset value of 1/2 × QLmax is set for the image having the lowest exposure being the reference, and an offset value of 1/4 × QLmax is set for an image having an exposure difference of 1 Ev with respect to the reference image. It should be noted that the value QLmax is the maximum value of the QL value of each of the images G1-Gk. Further, an offset value of 0 is set for an image having the highest exposure. In this example, the exposure difference between the low-exposure image GL and the high-exposure image GH is 2 Ev, and therefore, the exposure adjustment unit 12 sets an offset value of 1/4 × QLmax for the low-exposure image GL.

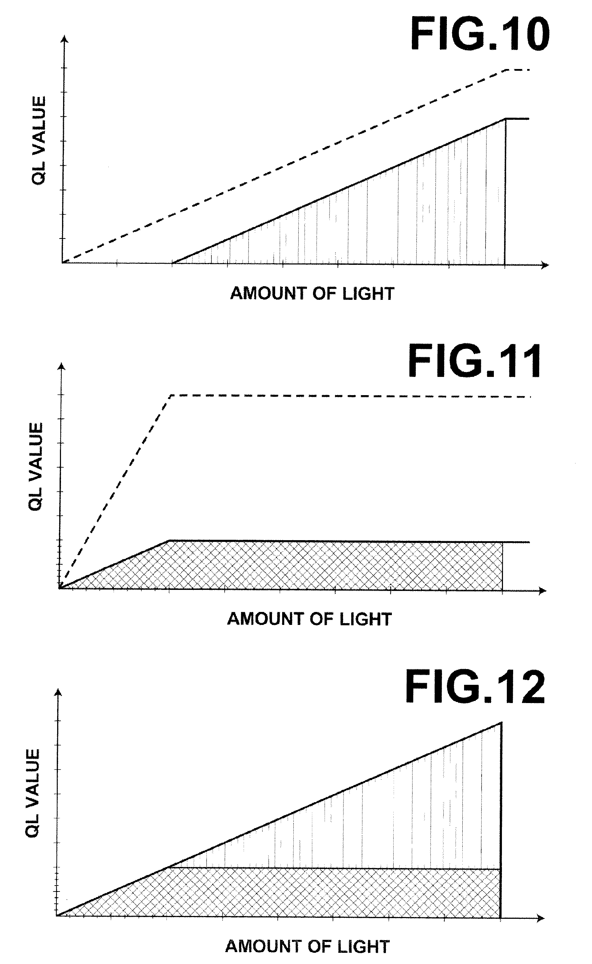

Then, the exposure adjustment unit 12 applies the exposure adjustment processing to the images using the thus set gain and offset values. FIG. 10 is a graph for explaining the gain processing and the offset processing applied to the low-exposure image, and FIG. 11 is a graph for explaining the gain processing and the offset processing applied to the high-exposure image.

As shown in FIG. 10, for the low-exposure image GL, the bit extension from m bits to m+2 bits is applied, and the gain processing at 1/1 gain and the offset processing with an offset value of 1/4 × QLmax are carried out. By this operation, the relationship between the amount of light and the QL value of the low-exposure image GL is modified from one shown by the dashed line to one shown by the solid line through the exposure adjustment processing.

On the other hand, as shown in FIG. 11, for the high-exposure image GH, the bit extension from m bits to m+2 bits is applied, and the gain processing at 1/4 gain is carried out. Since the offset value is 0, the offset processing is not carried out for the high-exposure image GH. By this operation, the relationship between the amount of light of and the QL value of the high-exposure image GH is modified from one shown by the dashed line to one shown by the solid line through the exposure adjustment processing.

It should be noted that it is not necessary to carry out the gain processing and the offset processing in this order, and the gain processing may be carried out after the offset processing.

The composition unit 13 combines the low-exposure image GL' and the high-exposure image GH' which have been subjected to the exposure adjustment processing. Specifically, the low-exposure image GL' and the high-exposure image GH' are combined together by adding up the low-exposure image GL' and the high-exposure image GH' to generate the composite image GM. FIG. 12 illustrates a relationship between the amount of light and the QL value of the composite image GM. As shown in FIG. 12, in the composite image GM, the resolution at the dark areas is equivalent to the resolution at the corresponding areas of the high-exposure image GH, and thus is improved from that of the low-exposure image GL. Further, through the offset processing, a linear relationship is achieved between the amount of light and the QL value of the composite image GM.

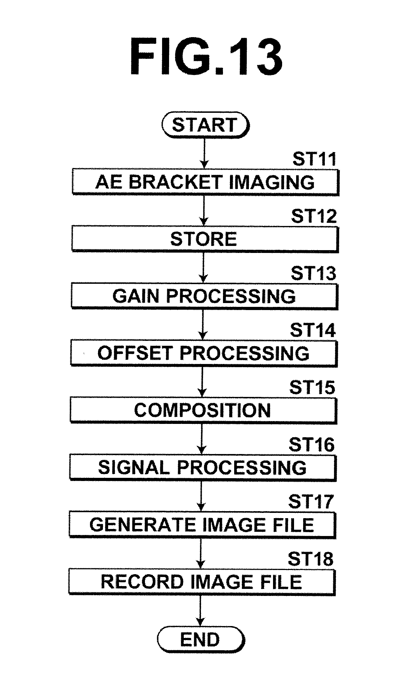

Next, operations carried out in the second embodiment are described. FIG. 13 is a flow chart illustrating the operations carried out in the second embodiment. It should be noted that, here, operations which are carried out after the release button is fully pressed are described.

As the release button is pressed, the imaging control unit 3 carries out the AE bracket imaging (step ST11) . By this operation, the images G1-Gk having different exposure values are obtained. The obtained images G1-Gk are subjected to the A/D conversion and are temporarily stored in the internal memory 8 (step ST12). Then, the exposure adjustment unit 12 applies the gain processing to the obtained images G1-Gk (step ST13), and further applies the offset processing to the images G1-Gk (step ST14). Then, the composition unit 13 combines the images G1-Gk, which have been subjected to the exposure adjustment processing, to generate the composite image GM (step ST15).

Subsequently, the signal processing unit 4 applies the signal processing to the composite image GM (step ST16), and the compression/decompression processing unit 5 generates the image file of the image which has been subjected to the signal processing (step ST17). Then, the media controlling unit 7 records the image file into the recording medium 10(step ST18), and the process ends.

As described above, the exposure adjustment processing in the second embodiment is achieved by the gain processing and the offset processing. Therefore, the exposure adjustment processing can be achieved with simple calculation of multiplication, addition and subtraction. Further, the gain processing can be carried out in combination with optical black correction for correcting for a dark current of the CCD 23 and white balance correction applied to the images. By combining these correction operations with the gain processing, an amount of calculation when the signal processing unit 4 applies the signal processing to the composite image GM can be reduced.

Next, a third embodiment of the invention is described. It should be noted that the configuration of a digital camera, to which the image processing device according to the third embodiment is applied, is the same as the configuration of the digital camera according to the first embodiment, and only the operations to be carried out are different. Therefore, detailed description of the configuration is omitted. In the third embodiment, the gain processing and the offset processing according to the second embodiment are carried out using tables. Further, in the third embodiment, gradual change is provided at a saturated portion of lightness of each image forming the composite image.

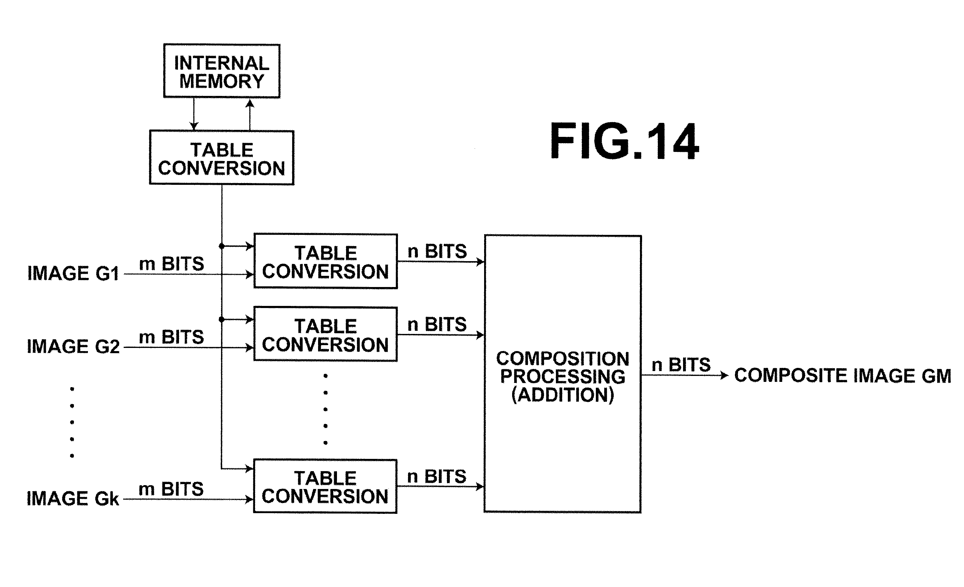

FIG. 14 is a conceptual diagram of the exposure adjustment processing carried out by exposure adjustment unit 12 and the composition processing carried out by the composition unit 13 in the third embodiment. As shown in FIG. 14, in the third embodiment, for each of the images G1-Gk represented by the image data which have been obtained through the AE bracket imaging and subjected to the A/D conversion, the exposure adjustment processing is carried out by applying the gain processing and the offset processing, as well as the bit extension from m bits to n bits (n > m), through table conversion. Then, the images subjected to the exposure adjustment processing are added up to output image data of the n-bit composite image GM. It should be noted that, in the third embodiment, a plurality of tables according to the exposure difference are stored in the internal memory 8, and appropriate ones of the tables are selected according to the exposure difference between the images to carry out the table conversion using the selected tables.

Now, a process of combining the images obtained through the AE bracket imaging in the third embodiment is specif ically described. In this example, it is supposed that the AE bracket imaging is carried out similarly to the first embodiment to obtain two images having an exposure difference of 2 Ev therebetween.

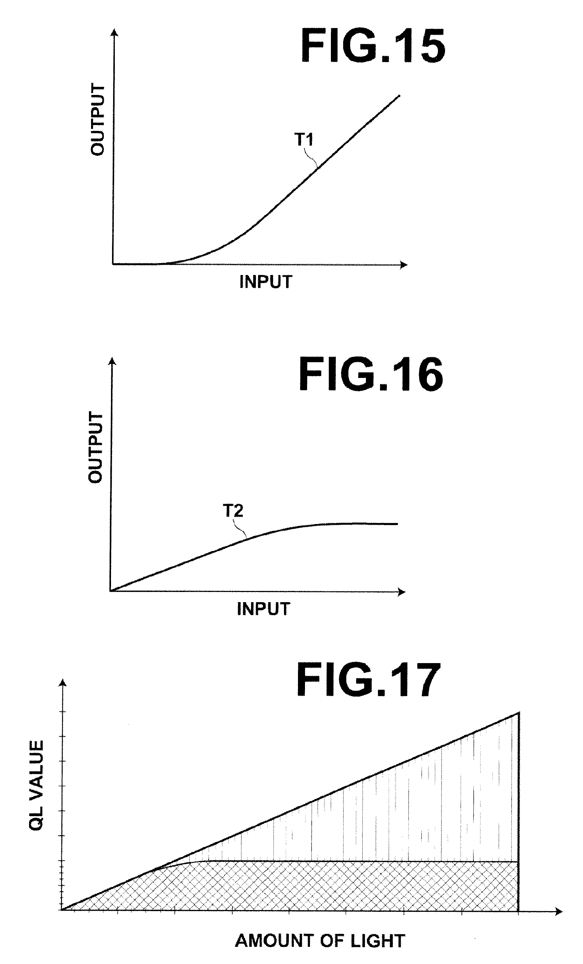

FIG. 15 shows a table used for the low-exposure image, and FIG. 16 shows a table used for the high-exposure image. As shown in FIG. 15, a table T1 for the low-exposure image is a conversion table which outputs 0 for an input value in the range from 0 to just before (less than) 1/4 of the maximum input value, and outputs gradually increased values for input values that are 1/4 or more of the maximum input value such that the output value is proportional to the input value. Specifically, this conversion table applies the gain processing with a gain of 1/1, the offset processing with an offset value of 1/4 × QLmax, and the bit extension from m bits to m+2 bits.

On the other hand, as shown in FIG. 16, a table T2 for the high-exposure image is a conversion table which outputs a value that is 1/4 of the input value, and brings the output gradually to a constant value for areas having a large input. Specifically, this conversion table applies the gain processing with a gain of 1/4 and the bit extension from m bits to m+2 bits.

FIG. 17 illustrates a relationship between the amount of light and the QL value of the composite image GM obtained by adding up the low-exposure image GL and the high-exposure image GH which have been converted using the tables T1 and T2. As shown in FIG. 17, in the composite image GM, the resolution at the dark areas is equivalent to the resolution at the corresponding areas of the high-exposure image GH, and thus is improved from that of the low-exposure image GL. Further, smooth transition is provided at the boundary between the low-exposure image GL and the high-exposure image GH forming the composite image GM.

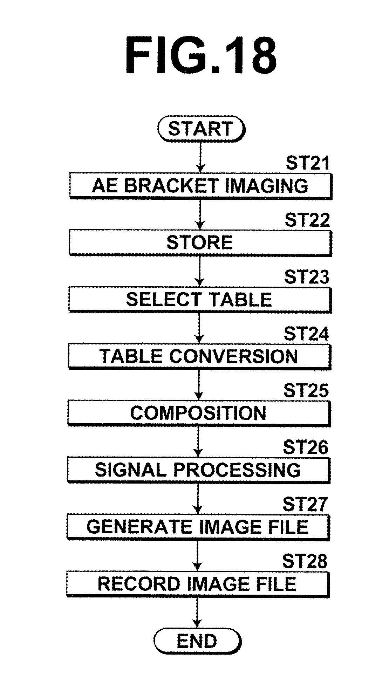

Next, operations carried out in the third embodiment are described. FIG. 18 is a flow chart illustrating the operations carried out in the third embodiment. It should be noted that, here, operations which are carried out after the release button is fully pressed are described.

As the release button is pressed, the imaging control unit 3 carries out the AE bracket imaging (step ST21) . By this operation, the images G1-Gk having different exposure values are obtained. The obtained images G1-Gk are subjected to the A/D conversion and are temporarily stored in the internal memory 8 (step ST22) . Subsequently, the exposure adjustment unit 12 selects appropriate ones of the tables stored in the internal memory 8 according to the exposure difference between the images (step ST23). Then, the exposure adjustment unit 12 carries out the exposure adjustment processing by applying the table conversion to the images G1-Gk using the selected tables (step ST24) . Then, the composition unit 13 combines the images G1-Gk, which have been subjected to the exposure adjustment processing, to generate the composite image GM (step ST25).

Subsequently, the signal processing unit 4 applies the signal processing to the composite image GM (step ST26), and the compression/decompression processing unit 5 generates the image file of the image which has been subjected to the signal processing (step ST27). Then, the media controlling unit 7 records the image file into the recording medium 10 (step ST28), and the process ends.

As described above, in the third embodiment, the exposure adjustment processing is carried out by applying the gain processing and the offset processing with referencing the tables, each of which outputs a lightness value after the gain processing and the offset processing for an inputted lightness value of each image. Thus, the exposure adjustment processing is achieved in a simple manner.

Further, the tables are adapted to apply the gain processing and the offset processing such that gradual change is provided at the saturated portion of the lightness of each of the images G1-Gk forming the composite image GM. Thus, smooth lightness transition can be provided at the boundary between the images forming the composite image GM, thereby further improving the image quality of the composite image GM.

Next, a fourth embodiment of the invention is described. It should be noted that, the configuration of a digital camera, to which the image processing device according to the fourth embodiment is applied, is the same as the configuration of the digital camera according to the first embodiment, and only the operations to be carried out are different. Therefore, detailed description of the configuration is omitted. In the fourth embodiment, the process to provide gradual change at the saturated portion of the lightness of each image forming the composite image and the offset processing are carried out using table conversion, and then, the gain processing similarly to the second embodiment is carried out.

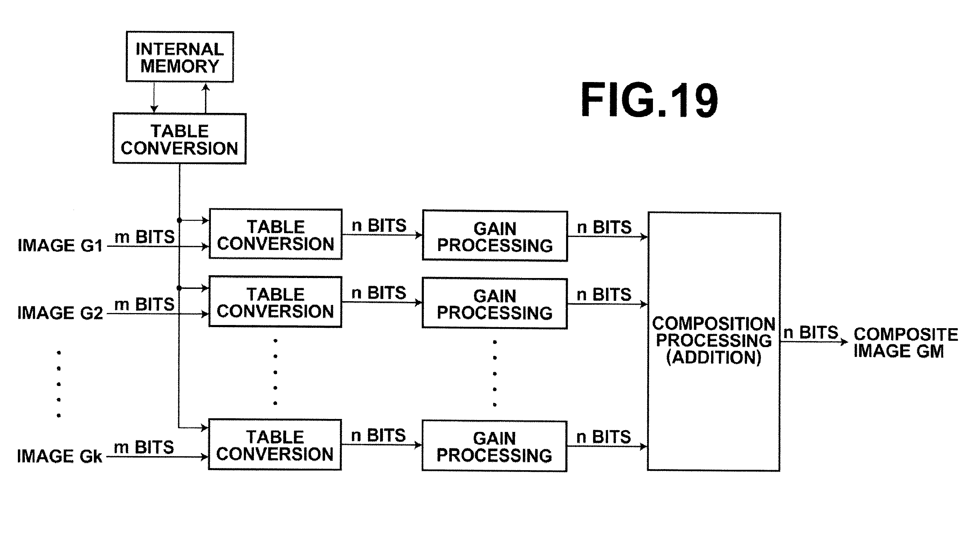

FIG. 19 is a conceptual diagram of the exposure adjustment processing carried out by exposure adjustment unit 12 and the composition processing carried out by the composition unit 13 in the fourth embodiment. As shown in FIG. 19, in the fourth embodiment, for each of the images G1-Gk represented by the image data which have been obtained through the AE bracket imaging and subjected to the A/D conversion, the exposure adjustment processing is carried out by applying the offset processing through the table conversion without applying the bit extension, and then, the gain processing and the bit extension from m bits to n bits (n > m) are applied to the images subjected to the table conversion. Then, the images subjected to the exposure adjustment processing are added up to output image data of the n-bit composite image GM. It should be noted that, in the fourth embodiment, a plurality of tables according to the exposure difference are stored in the internal memory 8, and appropriate ones of the tables are selected according to the exposure difference between the images to carry out the table conversion using the selected tables.

Now, a process of combining the images obtained through the AE bracket imaging in the fourth embodiment is specifically described. In this example, it is supposed that the AE bracket imaging is carried out similarly to the first embodiment to obtain two images having an exposure difference of 2 Ev therebetween.

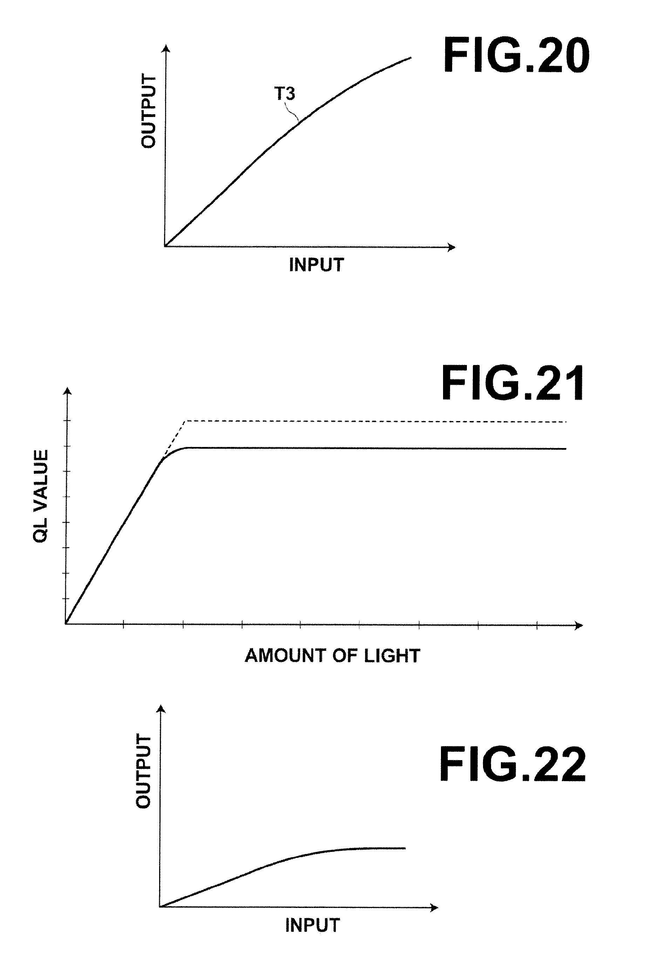

FIG. 20 shows a table used for the high-exposure image. It should be noted that, for the low-exposure image GL, the gain is set to 1/1 and only the offset processing is applied. Therefore, in the fourth embodiment, the table conversion of the low-exposure image GL is carried out similarly to third embodiment using the table T1 shown in FIG. 15. As shown in FIG. 20, the table T3 for the high-exposure image is a conversion table which does not apply the bit extension and outputs gradually decreased values for large input values.

FIG. 21 illustrates a relationship between the amount of light and the QL value of the high-exposure image GH after the conversion using the table T3. As shown in FIG. 21, in the high-exposure image GH after the conversion using the table T3, smooth change is provided at the portion where the QL value is saturated. Then, the exposure adjustment unit 12 applies the bit extension and the gain processing, using the gain set in the similar manner to the second embodiment, to the high-exposure image GH, which has been subjected to the table conversion.

FIG. 22 illustrates a relationship between the amount of light and the QL value of the high-exposure image GH after the gain processing. As shown in FIG. 22, the QL value of the high-exposure image GH subjected to the table conversion is changed through the gain processing to 1/4 of the value.

By adding up the thus obtained exposure-adjusted high-exposure image GH' and the exposure-adjusted low-exposure image GL', the composite image having the resolution at the dark areas being equivalent to the resolution at the corresponding areas of the high-exposure image GH, and thus being improved from that of the low-exposure image GL, as shown in FIG. 17, can be generated, similarly to the third embodiment. Further, smooth transition of the lightness can be provided at the boundary between the images forming the composite image GM, thereby further improving the image quality of the composite image GM.

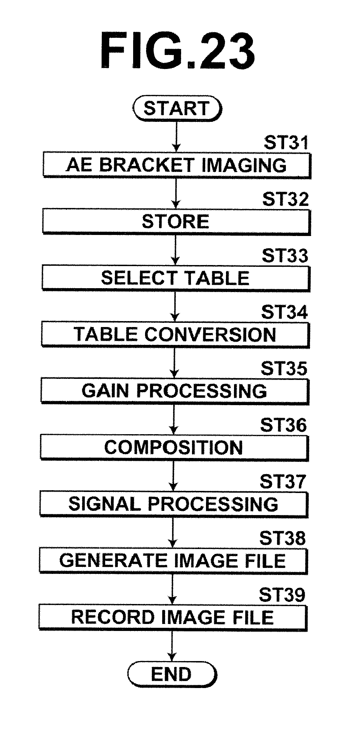

Next, operations carried out in the fourth embodiment are described. FIG. 23 is a flow chart illustrating the operations carried out in the fourth embodiment. It should be noted that, here, operations which are carried out after the release button is fully pressed are described.

As the release button is pressed, the imaging control unit 3 carries out the AE bracket imaging (step ST31) . By this operation, the images G1-Gk having different exposure values are obtained. The obtained images G1-Gk are subjected to the A/D conversion and are temporarily stored in the internal memory 8 (step ST32). Then, the exposure adjustment unit 12 selects appropriate ones of the tables stored in the internal memory 8 according to the exposure difference between the images (step ST33). Then, the exposure adjustment unit 12 applies the table conversion to the images G1-Gk using the selected tables (step ST34). Further, the exposure adjustment unit 12 applies the gain processing to the images G1-Gk which have been subjected to the table conversion (step ST35) . Then, the composition unit 13 combines the images G1-Gk, which have been subjected to the exposure adjustment processing, to generate the composite image GM (step ST36).

Subsequently, the signal processing unit 4 applies the signal processing to the composite image GM (step ST37), and the compression/decompression processing unit 5 generates the image file of the image which has been subjected to the signal processing (step ST38). Then, the media controlling unit 7 records the image file into the recording medium 10 (step ST39), and the process ends.

In a case where the bit extension is applied using a table, the volume of each table is large, and it is necessary to increase the storage area of the internal memory 8 for storing the tables. In contrast, in the fourth embodiment, after the images G1-Gk have been converted using the tables such that gradual change is provided at the saturated portion of the lightness of each image forming the composite image GM, the bit extension and the gain processing are applied to the images. Therefore, the storage area of the internal memory 8 for storing the tables can be smaller than that in the case where the tables which apply the bit extension are stored. As a result, the configuration of the device can be simplified and the costs of the device can be reduced.

It should be noted that, in the second and fourth embodiments, the gain for the low-exposure image GL in the gain processing is 1/1, and therefore only the bit extension is applied to the low-exposure image GL. Therefore, in a case where the exposure difference is 1 Ev, the gain processing for the low-exposure image GL may be achieved by bit shift.

Further, although the images obtained through the AE bracket imaging are subjected to the composition processing after they have been subjected to the exposure adjustment processing in the first to fourth embodiments, the exposure adjustment processing and the composition processing may sequentially be carried out. Now, this aspect is described as a fifth embodiment.

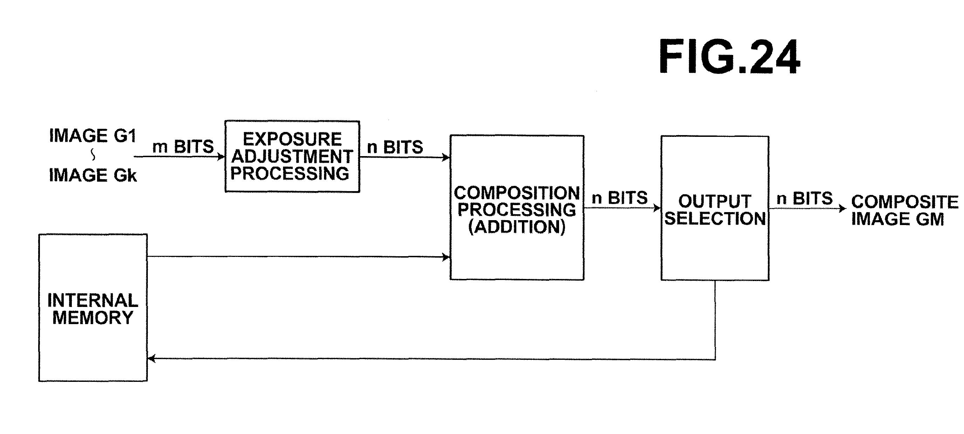

FIG. 24 is a conceptual diagram of the exposure adjustment processing carried out by exposure adjustment unit 12 and the composition processing carried out by the composition unit 13 in the fifth embodiment. As shown in FIG. 24, in the fifth embodiment, each of the images G1-Gk represented by the image data obtained through the AE bracket imaging and subjected to the A/D conversion is sequentially read out from the internal memory 8, and each read out image G1-Gk is subjected to the bit extension from m bits to n bits and the exposure adjustment processing. Then, the image subjected to the exposure adjustment processing is sequentially combined to form a composite image. If the composite image obtained so far is not the final composite image GM, the composite image is stored in the internal memory 8 as an intermediate composite image. Thereafter, the image sequentially read out from the internal memory 8 is subjected to the exposure adjustment processing, and is combined with the intermediate composite image stored in the internal memory 8. The exposure adjustment processing and the composition processing are repeated until the final composite image GM is obtained.

It should be noted that, as the exposure adjustment processing and the composition processing in the fifth embodiment, any of the exposure adjustment processing and the composition processing according to the first to fourth embodiments may be used.

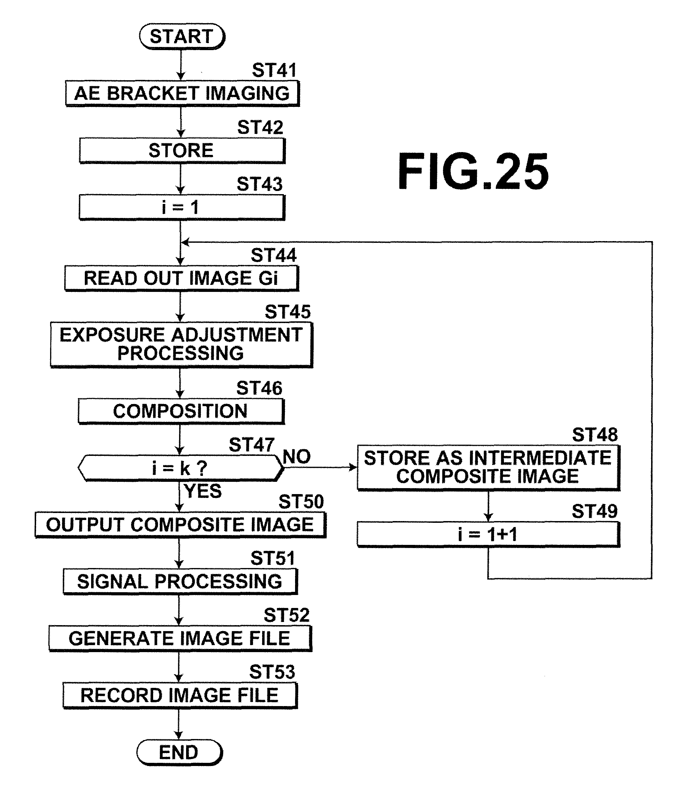

Next, operations carried out in the fifth embodiment are described. FIG. 25 is a flow chart illustrating the operations carried out in the fifth embodiment. It should be noted that, here, operations which are carried out after the release button is fully pressed are described.

As the release button is pressed, the imaging control unit 3 carries out the AE bracket imaging (step ST41) . By this operation, the images G1-Gk having different exposure values are obtained. The obtained images G1-Gk are subjected to the A/D conversion and are temporarily stored in the internal memory 8 (step ST42). Then, the exposure adjustment unit 12 sets the first image as an image Gi (i = 1 to k) to be processed (i=1, step ST43), and reads out the image Gi from the internal memory 8 (step ST44).

Then, the read out image Gi is subjected to the bit extension and the exposure adjustment processing (step ST45). Further, the composition unit 13 combines the image Gi subjected to the exposure adjustment processing with the intermediate composite image stored in the internal memory 8 to generate the composite image (step ST46). It should be noted that, when i=1, no intermediate composite image is stored in the internal memory 8, and therefore the image Gi subjected to the exposure adjustment processing is stored as the intermediate composite image. Then, the composition unit 13 determines whether or not all the images have been combined (i=k, step ST47). If the determination in step ST47 is negative, the composite image is stored in the internal memory 8 as the intermediate composite image (step ST48), and the next image is set as the image to be processed (i=i+1, step ST49). Then, the process returns to step ST44. If the determination in step ST47 is affirmative, the composite image is outputted as the final composite image GM (step ST50).

Subsequently, the signal processing unit 4 applies the signal processing to the composite image GM (step ST51), and the compression/decompression processing unit 5 generates the image file of the image which has been subjected to the signal processing (step ST52). Then, the media controlling unit 7 records the image file into the recording medium 10 (step ST53), and the process ends.

As described above, in the fifth embodiment, the images G1-Gk are sequentially subjected to the exposure adjustment processing, and each of the images G1-Gk, which has been subjected to the exposure adjustment processing, is sequentially combined to form the composite image. In this case, the necessary capacity of the internal memory 8 can be smaller than the case where the images G1-Gk are subjected to the exposure adjustment processing at the same time, since it is not necessary to store the images G1-Gk which have been subjected to the exposure adjustment processing. As a result, the configuration of the device can be simplified and the costs of the device can be reduced.

It should be noted that, although the image processing device according to the invention is applied to the digital camera in the first to fifth embodiments, the image processing device according to the invention may be used alone. In this case, the image processing device is provided with various interfaces for inputting the images obtained through the AE bracket imaging to the image processing device.

Further, although the exposure adjustment processing and the composition processing are carried out using the image having the lowest exposure value as the reference in the first to fifth embodiments, the exposure adjustment processing and the composition processing may be carried out using the image having the highest exposure value as the reference. In this case, the gain processing is carried out such that the gain of the image(s) other than the highest exposure image is increased.

Moreover, although the tables are stored in the internal memory 8 in the third and fourth embodiments, a dedicated memory for storing the tables may be provided.

The image processing device according to the embodiments of the invention has been described. However, the present invention may also be implemented in the form of a program for causing a computer to function as means corresponding to the exposure adjustment unit 12 and the composition unit 13 to carry out the operations shown in FIG. 7, 13, 18, 23 or 25. The present invention may also be implemented in the form of a computer-readable recording medium containing the program.

### Effect of the Invention

According to the present invention, a plurality of images having different exposure values are obtained, and then, for each image, bit extension and exposure adjustment processing are carried out to adjust the exposure values of the images to an exposure value of a first image, which has the lowest exposure value, of the images. Then, the images subjected to the exposure adjustment processing are combined to generate a composite image.

The image having a higher exposure value has higher resolution at dark areas. In contrast, the image having a lower exposure value has higher resolution at light areas. Therefore, the composite image, which is obtained from the images subjected to the bit extension and the exposure adjustment to adjust the exposure values of the images to the exposure value of the first image, maintains bit accuracy of the high exposure image, in particular, at dark areas, and thus has high resolution at the dark areas. Therefore, according to the invention, a composite image with improved tone reproducibility, in particular, at dark areas can be provided.

The exposure adjustment processing may be carried out by applying the gain processing and the offset processing to the images. In this case, the exposure adjustment processing can be achieved by simple calculation of multiplication, addition and subtraction. Further, the gain processing may be carried out in combination with optical black correction for correcting for a dark current of the image pickup device and white balance correction applied to the images. By combining these correction operations with the gain processing, an amount of calculation when the images are processed can be reduced.

When the exposure adjustment processing is carried out by applying the gain processing and the offset processing, a table which outputs a lightness value after the gain processing and the offset processing for an inputted lightness value of each image may be referenced, thereby achieving the exposure adjustment processing in a simple manner.

In this case, the table may be adapted to apply the gain processing and the offset processing to provide gradual change at a saturated portion of lightness of each image forming the composite image. This allows providing smooth transition of lightness at the boundary between the images forming the composite image, thereby further improving image quality of the composite image.

Alternatively, the exposure adjustment processing may be carried out by converting the images using a table to provide gradual change at a saturated portion of the lightness of each image forming the composite image and to apply offset processing to avoid overlap of the images, and then applying the bit extension and the gain processing to the converted images. In this case, the bit extension is not included in the conversion using table. Thus, the volume of each table can be reduced, and the necessary capacity of the storage means for storing the table can be reduced. As a result, the configuration of the device can be simplified and the costs of the device can be reduced.

Alternatively, the exposure adjustment processing may sequentially be applied to the images, and each image subjected to the exposure adjustment processing may sequentially be combined to form the composite image. In this case, the necessary capacity of the storage means for processing can be smaller than that in the case where the images are subjected to the exposure adjustment processing at the same time. As a result, the configuration of the device can be simplified and the costs of the device can be reduced.

## Claims

1. An image processing device comprising:
image obtaining means (2, 3) for obtaining a plurality of images having different exposure values;
exposure adjustment means (12) for carrying out exposure adjustment processing by applying bit extension to each of the images and adjusting exposure values of the images to an exposure value of a first image of the images, the first image having the lowest exposure value; and
composition means (13) for generating a composite image by combining the images subjected to the exposure adjustment processing.

2. The image processing device as claimed in claim 1, wherein
the exposure adjustment means (12) carries out the exposure adjustment processing by correcting lightness of the image other than the first image to lightness of the first image and applying bit extension to the images, and
the composition means (13) generates the composite image by substituting a part of information of the first image with a corresponding part of information of the other image subjected to the exposure adjustment processing.

3. The image processing device as claimed in claim 1, wherein
the exposure adjustment means (12) carries out the exposure adjustment processing by applying bit extension and gain processing to the images to adjust lightness of the image other than the first image to lightness of the first image, and applying offset processing to the images to avoid overlap of the images after the gain processing, and
the composition means (13) generates the composite image by adding up the images subjected to the exposure adjustment processing.

4. The image processing device as claimed in claim 3, wherein the exposure adjustment means (12) carries out the gain processing and the offset processing by referencing a table, the table outputting a lightness value after the gain processing and the offset processing for an inputted lightness value of each image.

5. The image processing device as claimed in claim 4, wherein the table is adapted to apply the gain processing and the offset processing to provide gradual change at a saturated portion of the lightness of each image forming the composite image.

6. The image processing device as claimed in claim 1, wherein
the exposure adjustment means (12) carries out the exposure adjustment processing by converting the images using a table to provide gradual change at a saturated portion of the lightness of each image forming the composite image and to apply offset processing to avoid overlap of the images, and applying the bit extension and gain processing to the converted images, and
the composition means (13) generates the composite image by adding up the images subjected to the exposure adjustment processing.

7. The image processing device as claimed in any one of claims 1 to 6, wherein
the exposure adjustment means (12) applies the exposure adjustment processing sequentially to the images, and
the composition means (13) sequentially combines each image subjected to the exposure adjustment processing to generate the composite image.

8. The image processing device as claimed in any one of claims 1 to 7, wherein the image obtaining means comprises:
imaging means (2) for obtaining an image through a photographing operation; and
imaging control means (3) for controlling the imaging means to obtain the plurality of images by carrying out more than one photographing operations to take a same scene with different exposure values.

9. An image processing method comprising:
obtaining a plurality of images having different exposure values;
carrying out exposure adjustment processing by applying bit extension to each of the images and adjusting exposure values of the images to an exposure value of a first image of the images, the first image having the lowest exposure value; and
generating a composite image by combining the images subj ected to the exposure adjustment processing.

10. A computer-readable recording medium containing a program for causing a computer to carry out an image processing method, the program comprising the procedure of:
obtaining a plurality of images having different exposure values;
carrying out exposure adjustment processing by applying bit extension to each of the images and adjusting exposure values of the images to an exposure value of a first image of the images, the first image having the lowest exposure value; and
generating a composite image by combining the images subj ected to the exposure adjustment processing.
